# FASCICULE DE BREVET EUROPEEN

(11) **EP 2 003 265 B1**
(45) Date de publication et mention de la délivrance du brevet: **07.08.2013**
(21) Numéro de dépôt: 08305253.0
(22) Date de dépôt: 12.06.2008
(51) Int. Cl.: E04F 11/18, F16B 7/04, F16B 19/00

(54) **Système de balustrade, rampe ou analogue**
System für Geländer, Rampen oder für ähnliche Zwecke
System of balustrade, ramp or similar

(30) Priorité: 15.06.2007 FR 0704300
(43) Date de publication de la demande: 17.12.2008
(73) Titulaire: Burger et CIE (Société par Actions Simplifiée), 68660 Liepvre (FR)
(72) Inventeur: Burger, Bertrand, 68230 Niedermorschwir (FR)
(74) Mandataire: Nuss, Pierre

(56) Documents cités:
- EP-A- 0 837 255
- EP-A1- 1 048 799
- EP-A2- 1 630 320
- GB-A- 2 325 943
- US-A- 2 150 651
- US-A- 4 070 119
- US-A1- 2003 164 488

## Description

La présente invention concerne le domaine des équipements intérieurs et extérieurs des maisons, immeubles d'habitation, immeubles à usage professionnel ou commercial et bâtiments publics, en particulier les équipements de sécurité et décoratifs pour surfaces ouvertes recevant du public ou un passage de personnes.

L'invention est notamment relative à des équipements de délimitation à structure allongée composés par l'assemblage de plusieurs parties ou segments mis bout à bout, et plus spécifiquement à des composants permettant de réaliser de telles constructions allongées par assemblage mutuel de parties ou de segments standard de taille individuelle réduite.

Le principal but de l'invention est de fournir un système de balustrade, garde-corps, rampe d'escalier ou analogue comprenant un nombre limité de pièces, pouvant s'adapter à différentes configurations, permettant de varier l'aspect esthétique et ne présentant pas de raccord visible au niveau des éléments longitudinaux à structure continue s'étendant sur la longueur dudit système.

En outre, l'assemblage des parties constitutives desdits éléments longitudinaux devrait pouvoir être réalisé par simple emboîtement, sans nécessiter d'opération de fixation ou de solidarisation supplémentaire, ni d'opération d'usinage ou de conformation particulière des parties à assembler.

Différents systèmes de balustrade, de garde-corps ou analogues, formés à partir de plusieurs parties élémentaires assemblées entre elles au moyen de pièces d'assemblage, ont déjà été proposés dans l'état de la technique en particulier dans les documents EP-A-1 630 320, US-A-2003/164488, EP-A-1 048 799 et US-A-2 150 651.

Toutefois, ces systèmes connus présentent tous un ou plusieurs des inconvénients suivants :
- nécessité d'une conformation intérieure particulière, notamment un rainurage, des parties à assembler (voir EP-A-1 048 799 et US-A-2003/164488) ;
- présence de raccords visibles du fait d'une partie apparente de la pièce de fixation après assemblage (voir EP-A-1 630 320 et EP-A-1 048 799) ;
- nécessité d'une solidarisation des pièces à assembler avec la pièce d'assemblage par des vis (voir EP-A-1 630 320), par un agent collant ou analogue (voir US-A-2003/164488) ou par soudage à bossages (voir US-A-2 150 651).

Par ailleurs, par le document GB-A-2 325 943, on connaît un système de balustrade, rampe ou analogue, présentant les caractéristiques du préambule de la revendication 1.

Néanmoins, le système connu par ce document fait également état de raccords visibles et nécessite obligatoirement un collage pour verrouiller l'assemblage des parties constitutives.

Les caractéristiques de la revendication 1 permettent de surmonter les inconvénients précités de l'état de la technique et d'atteindre le but recherché, tel qu'exposé précédemment.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
la figure 1A est une vue éclatée en perspective de deux portions adjacentes assemblées faisant partie d'un système de balustrade conforme à l'invention ;
la figure 1B est une vue en perspective d'une portion courante d'une balustrade selon une variante de réalisation du système représenté figure 1A ;
la figure 2 est une vue en perspective d'un système de rampe d'escalier conforme à l'invention, à l'état assemblé, se prolongeant par une portion de balustrade selon l'invention ;
la figure 3A est une vue en perspective d'un poteau faisant partie du système de balustrade ou de rampe selon l'invention ;
la figure 3B est une vue éclatée du poteau de la figure 3A ;
la figure 4 est une vue en élévation latérale du poteau des figures 3A et 3B ;
les figures 5A, 5B et 5C sont des vues en coupe respectivement selon A-A, selon H-H et selon G-G (les deux dernières à une échelle différente), du poteau représenté sur la figure 4 ;
la figure 6 est une vue à une échelle différente du détail D de la figure 5A ;
la figure 7 est une vue en perspective d'une pièce d'assemblage faisant partie du système représenté sur les figures 1A, 1B et 2, selon un premier mode de réalisation de l'invention;
la figure 8 est une vue en élévation latérale de la pièce de la figure 1 ;
la figure 9 est une vue en coupe selon A-A de la pièce représentée sur la figure 8 ;
la figure 10 est une vue, à une échelle différente, du détail B de la figure 9 et de la figure 13 ;
la figure 11 est une vue en perspective d'une pièce d'assemblage faisant partie du système représenté sur les figures 1A, 1B et 2 selon un second mode de réalisation de l'invention ;
la figure 12 est une vue en élévation latérale de la pièce de la figure 11 ;
la figure 13 est une vue en coupe selon A-A de la pièce représentée sur la figure 12 ;
la figure 14 est une vue en perspective d'une balustrade selon une variante de réalisation de l'invention ;
la figure 15 est une vue partielle éclatée d'une portion de la balustrade de la figure 14, illustrant le montage d'éléments de remplissage surfaciques ;
la figure 16 est une vue en coupe et à une échelle différente, similaire à la figure 6, de la partie supérieure d'un poteau faisant partie de la portion de balustrade de la figure 15 ;
la figure 17 est une vue en perspective d'un poteau faisant partie de la portion de balustrade de la figure 15 avant montage des points de fixation ;
la figure 18 est une vue en perspective d'une portion extrémale de la balustrade de la figure 14, et,
la figure 19 est une vue en perspective d'une autre portion extrémale de la balustrade de la figure 14.

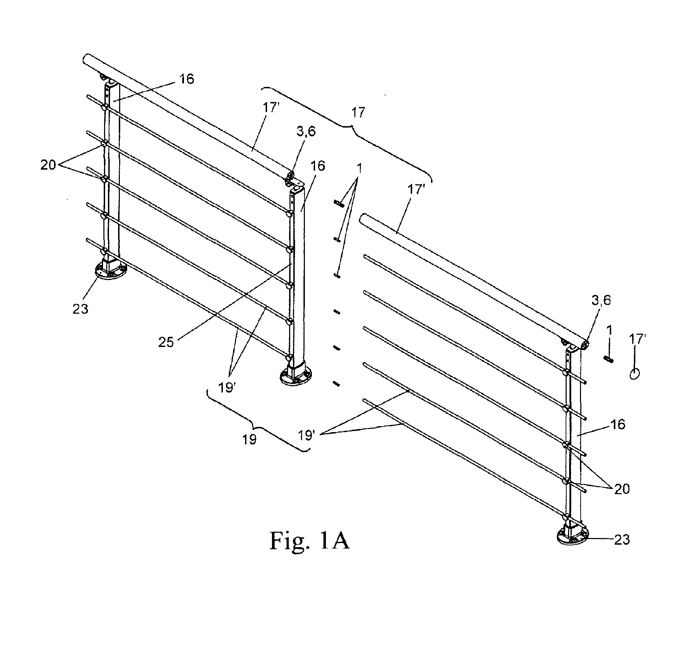

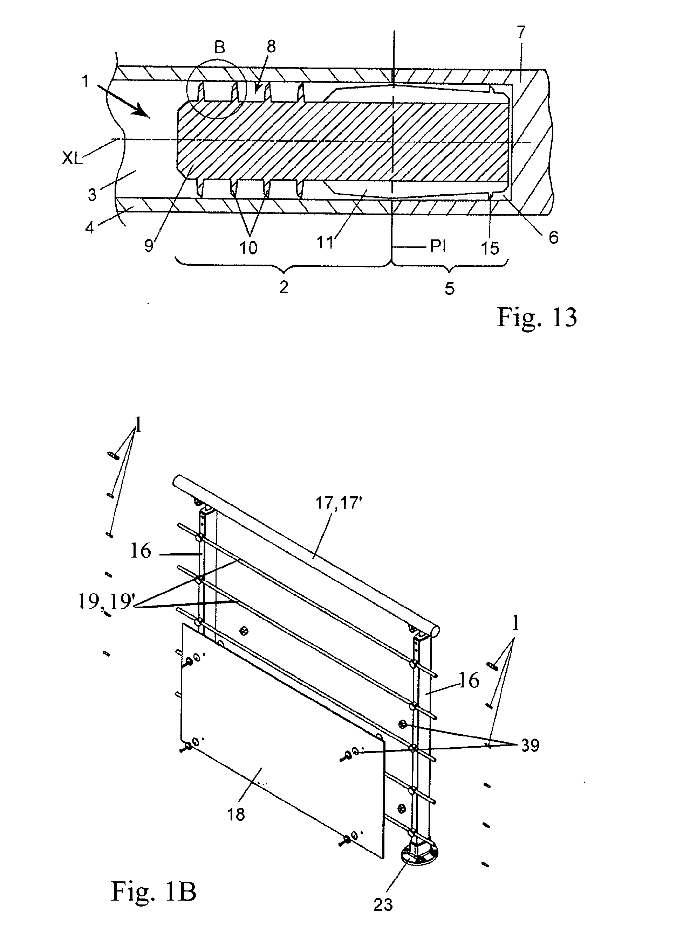

La présente invention concerne, comme le montrent les figures 1 à 6 et 14 des dessins annexés, un système de balustrade, rampe, garde-corps, garde-fou ou analogue pour escalier, terrasse, plateforme ou analogue.

Ce système est composé d'au moins deux poteaux 16 supportant une main courante ou barre d'appui supérieure 17 et entre lesquels s'étend au moins un élément de remplissage surfacique 18 et/ou plusieurs éléments d'entretoisement allongés 19, mutuellement espacés sur la hauteur desdits poteaux et solidarisés avec ces derniers au niveau de points de fixation 20, la main courante 17 et/ou les éléments d'entretoisement 19 étant constitué(e)(s) par plusieurs segments ou parties 17', 19' assemblés bout à bout.

Ce système comprend également une ou plusieurs pièces d'assemblage 1 reliant rigidement bout à bout les segments et/ou parties 17', 19' formant la main courante 17 et/ou les éléments d'entretoisement 19, chaque pièce d'assemblage étant composée d'une première partie 2 adaptée pour être emboîtée à force dans un orifice cylindrique 3, borgne ou traversant, d'un premier corps 4 et d'une seconde partie 5 adaptée pour être emboîtée à force dans un orifice cylindrique 6, borgne ou traversant, d'un second corps 7, ladite pièce d'assemblage 1 étant telle que la première partie 2 comprend, d'une part, une première portion frontale 8 formée d'un corps cylindrique allongé (9) pourvu d'au moins deux formations 10 annulaires protubérantes, mutuellement décalées dans la direction longitudinale XL dudit corps 9 et présentant en coupe une forme en barbelure ou dent et, d'autre part, une seconde portion 11 contiguë à la première portion 8 et s'évasant avec une section croissante jusqu'au plan d'interface PI avec la seconde partie 5, les diamètres DF des formations annulaires 10 étant égales ou légèrement supérieures au diamètre de l'orifice 3 du premier corps 4.

Le premier corps 4 correspond à un premier élément 17' ou 19' et le second corps 7 à un second élément 17' ou 19'.

Les pièces 1 permettent de réaliser des éléments allongés continus de grandes longueurs à partir de parties ou de segments assemblé(e)s de manière continue et invisible.

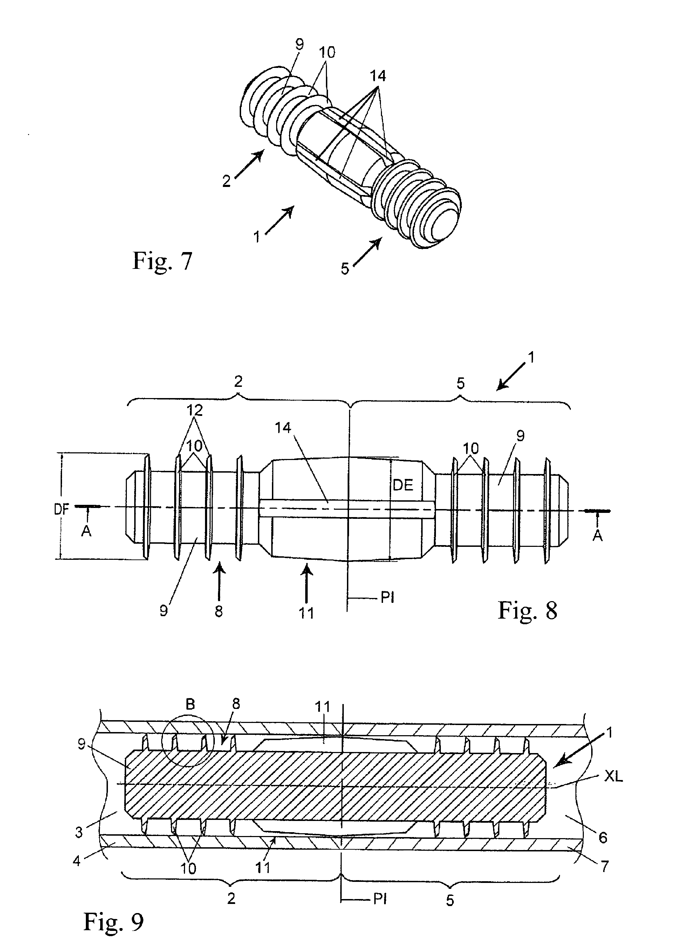

Les figures 7 à 13 montrent une pièce d'assemblage 1 destinée à relier deux corps 4 et 7 (identiques ou non) de manière rigide bout à bout telle que mentionnée ci-dessus.

L'orifice 3, cylindrique à diamètre constant, recevant la première partie 2 de la pièce 1 pourra être constitué par le passage interne du premiers corps 4 (corps tubulaire creux), par une portion de passage formée, dans l'extrémité dudit corps 4, par une perforation axiale creusée de l'extrémité du corps plein 4, par exemple à l'aide d'un gabarit, ou encore par un orifice borgne formé dans ledit corps 4. Il en est de même pour l'orifice 6 du second corps 7.

Les formations annulaires 10 assurent à la fois un positionnement axial précis, en coopération avec le contour extérieur de la seconde portion 11, et, par engagement avec la face interne de l'orifice 3, une rétention de la première partie 2 dans le premier corps 4.

Ladite première partie 2 est introduite à force dans l'orifice 3 du premier corps 4 jusqu'au plan d'interface PI et la seconde partie 5 est introduite de même dans l'orifice 6 du second corps 7 également jusqu'au plan d'interface PI, le raccord entre les deux corps 4 et 7 étant ainsi invisible de l'extérieur.

Afin de favoriser le montage et d'améliorer les performances du raccord, les formations annulaires 10, au moins au nombre de trois, avantageusement au nombre de quatre à six, peuvent comporter chacune un bord extérieur 10' pourvu d'au moins une arête périphérique 12 et une structure à conformation orientée favorisant leur introduction dans et résistant à leur extraction de l'orifice 3 du premier corps 4.

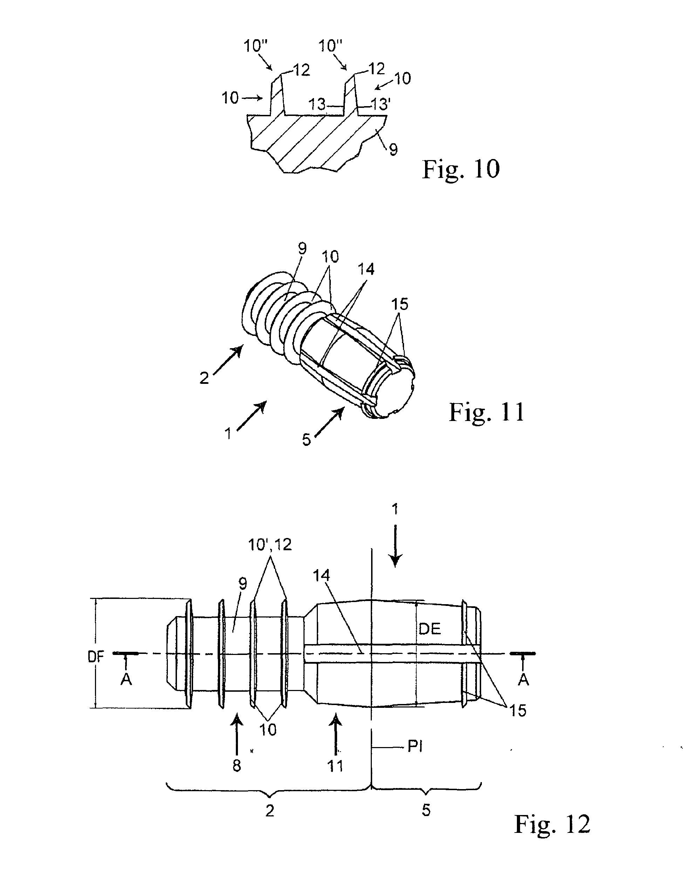

Préférentiellement, et comme le montre en détail la figure 10, chaque formation annulaire 10 peut présenter, par rapport à la direction d'introduction de la première partie 2 dans l'orifice 3, un flanc avant 13 et un flanc arrière 13' définissant ensemble une forme légèrement effilée vers l'extérieur en section, le bord périphérique 10' définissant une surface annulaire biseautée 10", rejoignant le flanc arrière 13' pour former une arête circulaire 12 proéminente radialement vers l'extérieur.

En vue d'aboutir à un montage serré au niveau des ouvertures des orifices 3 et 6 respectivement des premier et second corps 4 et 7, tout en favorisant un emboîtement avec une contrainte progressive, la seconde portion 11 de la première partie 2 s'élargit avantageusement de manière sensiblement tronconique vers le plan d'interface PI avec la seconde partie 5, au niveau duquel elle présente un diamètre extérieur DE au moins légèrement supérieur au diamètre intérieur de l'orifice 3 du premier corps 4 et en ce que ladite seconde portion 11 est pourvue d'au moins deux rainures ou gorges 14 latérales, préférentiellement quatre, s'étendant dans la direction longitudinale XL de ladite pièce d'assemblage 1 et répartie uniformément sur le pourtour de ladite seconde portion 11 (figures 8, 9, 12 et 13).

Conformément à un premier mode de réalisation de la pièce 1, destiné notamment à assembler deux corps 4 et 7 identiques et ressortant des figures 7 à 9, la seconde partie 5 peut présenter une structure identique à la première partie 2, les deux parties 2 et 5 étant symétriques par rapport au plan d'interface PI.

Conformément à un second mode de réalisation de la pièce 1, destiné notamment à rapporter un second corps 7 formant accessoire en bout d'un premier corps 4 principal, la seconde partie 5 consiste en un prolongement de la seconde portion 11 de la première partie 2, avec une section transversale de forme identique et de dimension décroissante vers l'extrémité libre de ladite seconde partie 5, préférentiellement avec un taux de décroissance sensiblement équivalent au taux de croissance de la section de la seconde portion 11 de la première partie 2 en direction du plan d'interface PI (figures 11 à 13).

Avantageusement, la seconde partie 5 comporte, à proximité de son extrémité libre éloignée du plan d'interface PI, au moins une formation annulaire 15 protubérante radialement, continue ou non, présentant en coupe une forme en dent ou en barbelure et assurant le calage axial et favorisant la rétention de ladite seconde partie 5 dans l'orifice 6 du second corps 7.

Pour verrouiller la liaison réalisée par la pièce d'assemblage 1, il peut être prévu, en outre, de déposer de la colle dans les orifices 3 et 6, compatible avec les matériaux des corps 4 et 8 et de la pièce 1.

Les formations annulaires 10 et 15 peuvent soit présenter une structure continue en forme de couronnes, soit présenter une structure discontinue formée de segments d'ailettes alignées circonférentiellement.

De manière avantageuse, la pièce d'assemblage consiste en une pièce 1, pleine et d'un seul tenant, en un matériau thermoplastique, par exemple du polypropylène ou du polyamide, venue de moulage par injection.

La pièce 1 selon le premier mode de réalisation (figures 7 à 9) est particulièrement adaptée au raccordement de deux corps 4 et 7 de constitution allongée (segments 17', 19' de main courante 17 ou d'élément d'entretoisement 19), alors que la pièce 1 selon le second mode de réalisation (figures 11 à 13) est plus particulièrement destinée à la solidarisation d'accessoires de finition (embouts 17' de la figure 1A,...) sur les extrémités de tels éléments allongés, les accessoires étant emboîtés sur la seconde partie 5 de la pièce 1.

Selon une caractéristique du système selon l'invention, les segments 17', 19' rectilignes, et le cas échéant coudés, formant respectivement la main courante 17 et les éléments d'entretoisement 19 allongés sont reliés entre eux, deux à deux, au niveau de leurs extrémités adjacentes en butée et pourvus d'orifices 3, 6 adaptés, par une pièce d'assemblage 1 faisant partie de l'invention (premier mode de réalisation), reçue entièrement dans lesdits orifices 3, 6 contiguës.

Selon une autre caractéristique, les parties 17', 19' en forme d'embouts rapportées sur les extrémités libres de la main courante 17 et/ou des éléments d'entretoisement allongés 19 sont montés sur lesdites extrémités chacun par l'intermédiaire d'une pièce d'assemblage 1 selon le second mode de réalisation décrit ci-dessus, adaptée pour un montage à force et escamoté dans des orifices 17', 19' correspondant, respectivement de l'embout 7 et de l'extrémité libre du segment 17', 19' concernés.

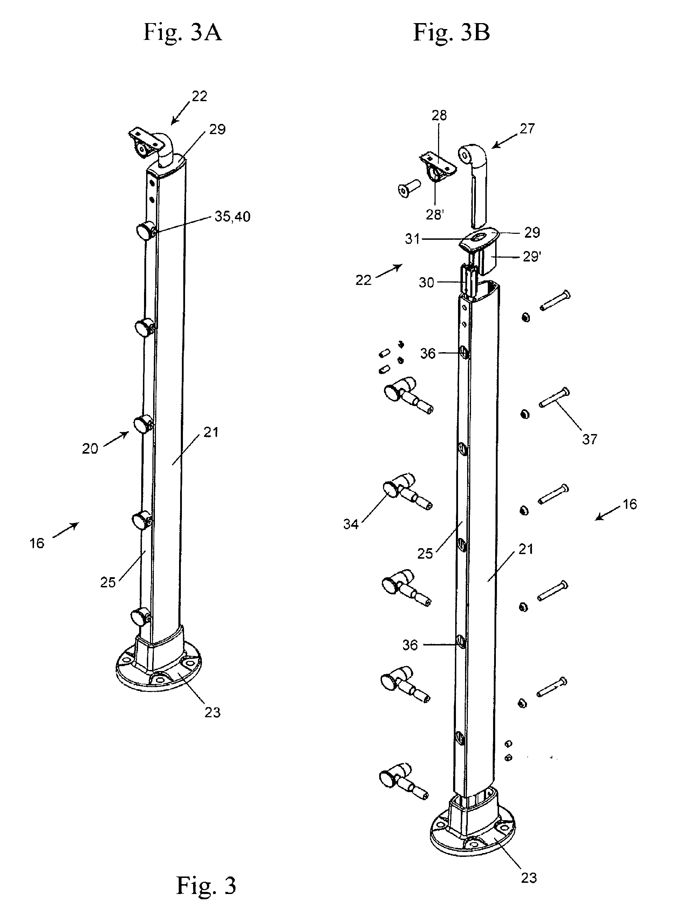

En accord avec un mode de réalisation préféré de l'invention, ressortant des figures 3 à 6 et 15 à 19 des dessins annexés, chaque poteau 16 est composé d'un corps creux profilé 21 pourvu d'une pluralité de points de fixation 20 pour l'élément de remplissage surfacique 18 et/ou les éléments 19 d'entretoisement allongés, d'un dispositif de montage 22 réglable en hauteur et en inclinaison pour la main courante 17 et d'une platine de fixation 23 pour une solidarisation latérale ou en extrémité basse du poteau 16 avec un support 24.

Avantageusement, le corps creux profilé 21 présente en coupe une paroi à section elliptique tronquée au niveau des deux extrémités de son grand axe, de manière à présenter deux méplats opposés 25 et 25', préférentiellement de largeurs différentes, et ledit corps 21 comporte à proximité d'au moins l'un des deux méplats 25, 25', préférentiellement au niveau des deux, une paire d'ailes 26, 26' formant par coopération, d'une part, une gorge ou des rails de guidage et/ou de positionnement pour un ou plusieurs composant(s) constitutif(s) 29, 29' ; 30 du dispositif de montage 22 et/ou, d'autre part, des paliers de maintien pour les composants 34, 37 constitutifs des points de fixation 20 répartis sur la hauteur du poteau 16 concerné.

La platine de fixation 23 présente une constitution différente en fonction du type de fixation souhaitée ou imposée pour chaque poteau 16.

Pour la fixation au sol 24 par son extrémité inférieure, le poteau 16 est monté dans une platine en forme d'embase avec une partie tubulaire recevant l'extrémité inférieure du poteau 16 et qui se prolonge latéralement pour former une plaque à son extrémité destinée à venir au contact avec le sol.

Pour une fixation latérale, la platine 23 comporte une partie en forme de plaque qui se prolonge par une formation apte à venir en prise extérieurement et latéralement avec le corps creux 21, au niveau du méplat 25 de plus grande dimension, en enserrant partiellement ledit corps 21. Il peut également être prévu de mettre en place des pièces supplémentaires d'entretoisement, permettant d'écarter davantage le poteau 16 du support 24 et/ou de l'orienter différemment par rapport à ce dernier.

Selon une construction très avantageuse du poteau selon l'invention, ressortant notamment des figures 3B, 5, 6 et 16, le dispositif de montage 22 pour la main courante 17 de chaque poteau 16 est constitué, d'une part, par un bras porteur 27 comprenant une partie coudée 27' sur l'extrémité de laquelle est solidarisée, avec faculté de pivotement et d'ablocage en position, une plaquette 28 de soutien et de fixation de la main courante 17, et une partie droite 27" formant coulisseau et, d'autre part, par deux composants complémentaires 29, 29' ; 30 montés dans l'extrémité supérieure du corps creux profilé 21 et destinés à assurer le coulissement guidé et le blocage en position avec serrage de la partie rectiligne formant coulisseau 27" du bras porteur 27.

La partie coudée 27' forme sensiblement un coude à angle droit et la plaquette 28 est formée d'un seul tenant avec un palier 28' recevant une vis de serrage solidarisant la plaquette 28 avec l'extrémité libre de la partie coudée 27' avec une forme de serrage réglable.

Il est ainsi possible de régler à la fois l'inclinaison et la hauteur de la main courante 17.

En accord avec une réalisation pratique avantageuse de l'invention, les deux composants 29, 29' ; 30 du dispositif de montage 22 logés dans le corps creux profilé 21 consistent, d'une part, en un couvercle 29 destiné à fermer la partie supérieure dudit corps creux 21 et présentant une ouverture de passage 31 pour la partie formant coulisseau 27" d'un bras porteur 27, ledit couvercle 29 comportant sur sa face intérieure une formation 29' définissant une gorge de guidage profilée 32 dans le prolongement d'une partie du bord de l'ouverture de passage 31 et des surfaces 33 pour un appui latéral sur la face intérieure du corps creux profilé 21 et, d'autre part, en une pièce d'appui 30 assurant un guidage complémentaire du coulisseau 27" par rapport à la gorge de guidage 32 et adaptée pour forcer sous contrainte ladite partie formant coulisseau 27" dans le fond de ladite gorge de guidage 32 pour en assurer le blocage en position, soit directement, soit par l'intermédiaire de vis pointeaux 30' la traversant (ces dernières réglant le serrage du coulisseau 27").

Afin de faciliter l'installation du dispositif de montage 22 et de garantir la rigidité de la liaison résultante, la formation 29' prolongeant intérieurement le couvercle 29 comporte deux fentes longitudinales 29" destinées à coopérer avec deux ailes de guidage 26' présentes sur la face interne de l'un 25' des deux méplats 25, 25' du corps creux profilé 21 du poteau 16 concerné et/ou une protubérance profilée latérale formant patin 29" destinée à coopérer avec la gorge délimitée par lesdites deux ailes 26'. De plus, la pièce d'appui 30 formant plaque de pression est logée dans une gorge délimitée par la paroi du corps creux 21 et deux ailes opposées 26 formées sur la base interne de cette paroi, au niveau de l'autre méplat 25.

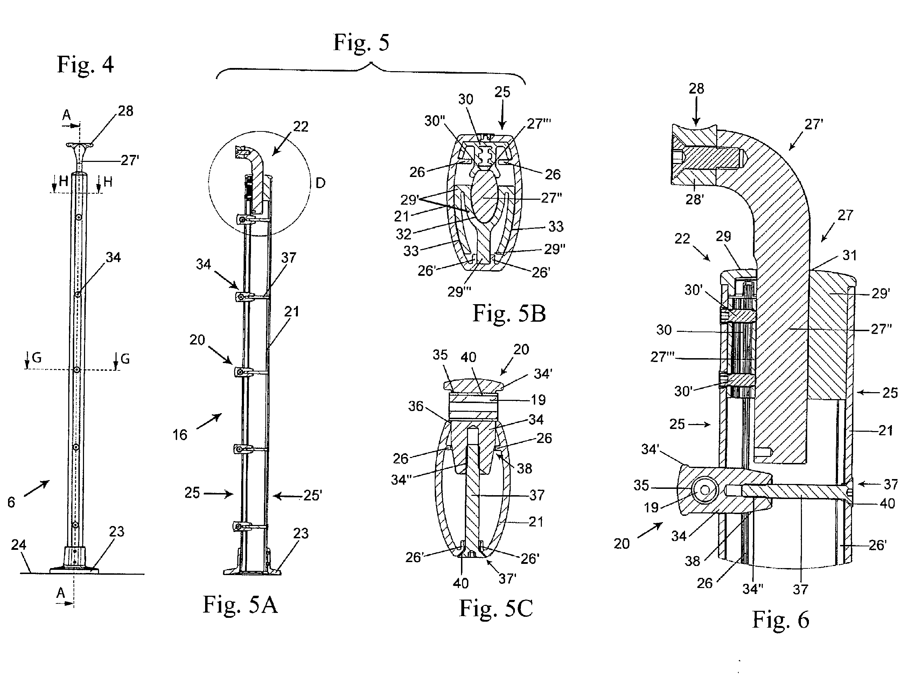

Comme le montrent les figures 3B et 5B, le coulisseau 27" peut présenter en coupe transversale une section de forme elliptique, tronquée au niveau de l'une des extrémités de son grand axe de manière à former un méplat 27"'. La gorge 32 présente un contour partiellement elliptique complémentaire de celui du coulisseau 27" et le méplat 27"' de ce dernier vient en contact guidé avec la plaque de pression 30 comportant une face frontale pourvue d'une rainure 30" de forme correspondante.

Selon une première variante de réalisation de l'invention ressortant des figures 3B, 5A, 5C et 6, chaque point de fixation 20 consiste en un écrou 34 à corps cylindrique comportant à l'une de ses extrémités une tête élargie 34' et à son extrémité opposée un orifice fileté borgne longitudinal 34", ledit corps cylindrique étant pourvu d'une perforation traversante transversale 35, à proximité de ladite tête 34', pour la réception d'une partie ou d'un segment d'un élément d'entretoisement allongé 19, ledit écrou 34 étant logé dans un orifice 36 ménagé dans l'un des méplats 25 du corps creux profilé 21 et coopérant avec une vis 37 montée dans un orifice 37' ménagé dans l'autre méplat 25', opposé au premier méplat 25.

La tête 34' présente des dimensions latérales supérieures à celles de l'orifice 36 et l'écrou 34 peut présenter deux positions de montage, à savoir, une première position fonctionnellement active dans laquelle il est traversé par un élément d'entretoisement allongé 19 et une seconde position escamotée et non fonctionnelle dans laquelle la tête 34' repose contre le méplat 25.

En vue de faciliter l'installation et d'augmenter la rigidité de chaque point de fixation 20, il peut être prévu que le corps cylindrique de l'écrou 34 de chaque point de fixation 20 est maintenu, à l'intérieur du corps creux profilé 21', par la paire d'ailes 26 formées à proximité du méplat 25 pourvu de l'orifice 36 de logement dudit écrou 34, le cas échéant par des découpes 38 de forme adaptée ménagées dans ces ailes 26 (et constituant par coopération mutuelle un palier), la vis 37 de fixation et de serrage coopérant avec ledit écrou 34 étant avantageusement maintenue latéralement par la paire d'ailes intérieures 26' formées à proximité du méplat 25 opposé dudit corps creux profilé 21 et constituant un second palier.

Il est ainsi fourni, au niveau de chaque méplat 25 et 25', un palier de réception double respectivement pour l'écrou 34 et pour la vis 37, cette dernière étant noyée dans l'épaisseur de la paroi du méplat 25' à l'état serré.

Préférentiellement, chaque élément de remplissage surfacique 18, préférentiellement transparent, par exemple sous forme d'un panneau de verre acrylique ou d'un panneau en un matériau opaque et rigide, est fixé sur les éléments d'entretoisement allongés 19 par l'intermédiaire de pièces d'accrochage 39 (figure 1B).

Ce système peut comprendre également, le cas échéant, en tant que composants d'entretoisement, des câbles passant par les points de fixation 20 correspondants des différents poteaux 16 et montés en extrémité sur des tendeurs, montés sur des points de fixation 20 des poteaux extrêmes 16 et traversant les points de fixation 20 des poteaux intermédiaires.

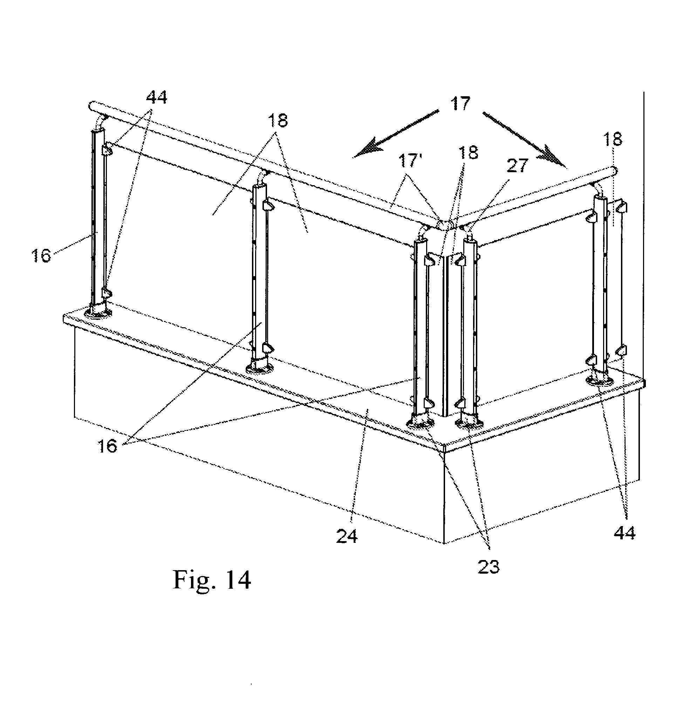

En accord avec une autre variante de réalisation de l'invention, ressortant des figures 14 à 19 des dessins annexés, il peut être prévu qu'au moins deux points de fixation 20 d'au moins un poteau ou de chaque poteau 16 consistent en des pièces de maintien 41, simples ou doubles, pour des éléments de remplissage surfaciques 18 en forme de plaques, notamment transparentes ou translucides, montées entre deux poteaux 16 consécutifs, lesdites plaques 18 étant reçues avec calage et maintenues par pincement avec verrouillage au niveau de chacune desdites pièces de maintien 41.

Dans cette réalisation du système de balustrade, les éléments d'entretoisement 19 sont remplacés par des plaques 18 (par exemple de même nature que celles mentionnées précédemment) directement solidarisées aux poteaux 16 par l'intermédiaire des pièces 41 (avantageusement deux par poteau, en position haute et basse).

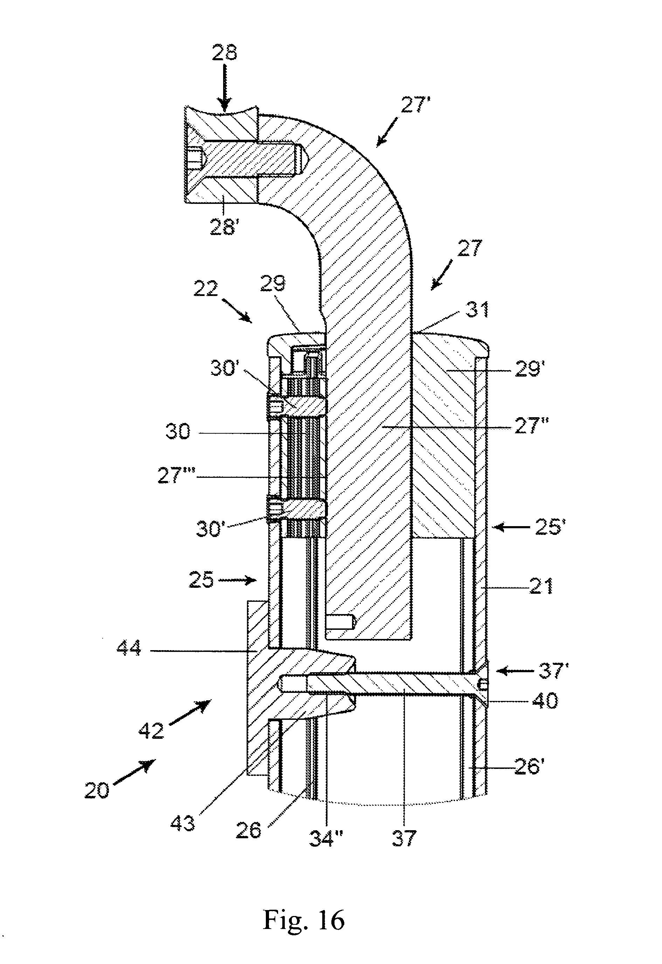

Comme le montrent notamment les figures 16 à 19, et selon une caractéristique avantageuse de l'invention, chaque pièce de maintien 41 est constituée, d'une part, par un corps de base 42 comprenant une première partie 43 à encastrer dans le poteau 16 correspondant et formant écrou et une seconde partie 44 en appui extérieur contre ledit poteau 16 et formant équerre ou cornière de calage et de fixation, la partie 43 formant écrou étant logé dans un orifice 36 ménagé dans l'un des méplats 25 du corps creux profilé 21 et coopérant avec une vis 37 montée dans un orifice 37' ménagé dans l'autre méplat 25', opposé au premier méplat 25, et, d'autre part, par au moins une contre-pièce 45 séparée, pouvant être assemblée avec le corps de base 42 par l'intermédiaire d'un moyen de fixation 46, tel que par exemple une vis ou analogue, de manière à coopérer avec une aile 44' de l'équerre ou cornière 44 du corps de base 42 pour assurer le maintien par pincement avec verrouillage d'un coin d'une plaque rectangulaire formant élément de remplissage surfacique 18.

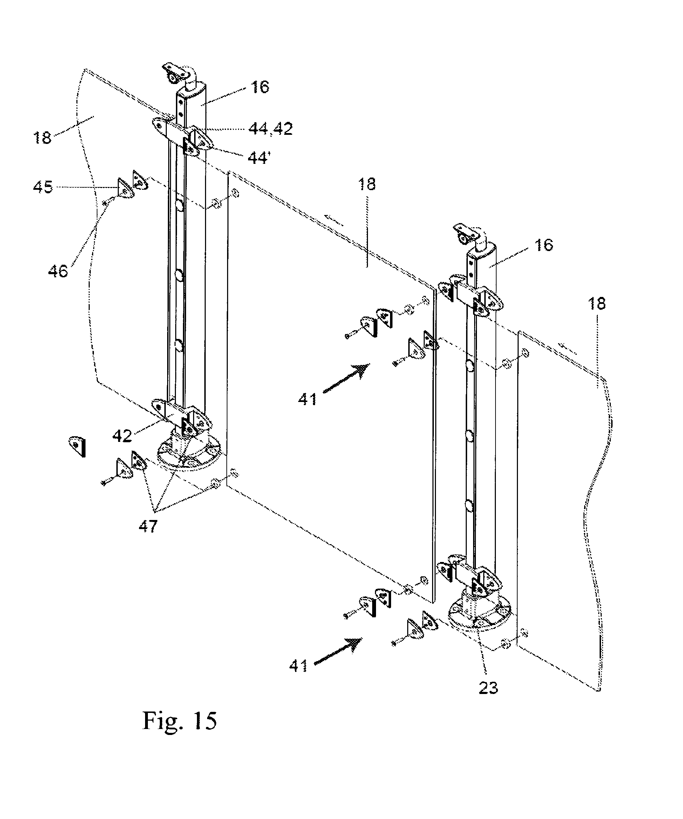

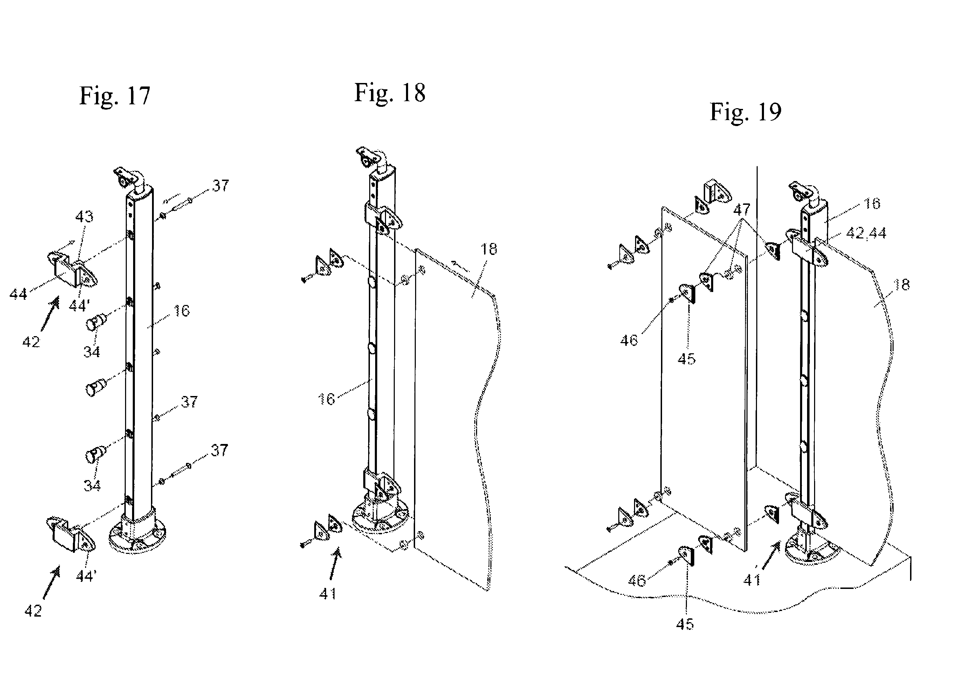

Les pièces de maintien 41 peuvent par conséquent être montées en lieu et place des écrous 34 et présentent soit une structure double et symétrique lorsque des panneaux ou plaques 18 sont montés des deux côtés du poteau 16 concerné (figures 15, 17 et 19), soit une structure simple lorsqu'elles sont montées sur un poteau d'extrémité (figure 18).

Des déclinaisons spécifiques des pièces de maintien 41 peuvent être prévues pour une fixation sur un support vertical, tel qu'un mur (figure 19).

En plus du corps de base 42 et de la ou des contre-pièces 45, chaque pièce de maintien 41 peut en outre comprendre des pièces intermédiaires de calage et de serrage supplémentaires 47 (plaquettes, rondelles) permettant un blocage optimal de la plaque 18.

De manière avantageuse, les éléments constitutifs du poteau 16, ainsi que les écrous 34 et éléments 42, 45 des points de fixation 20, sont réalisés en aluminium, ainsi que certaines parties au moins de la main courante 17 et les éléments d'entretoisement 19 et les éléments de visseries 37 sont réalisés en acier (préférentiellement de l'acier inoxydable), des joints de séparation 40 en un matériau synthétique étant disposés entre les surfaces de contact des éléments en des matériaux différents.

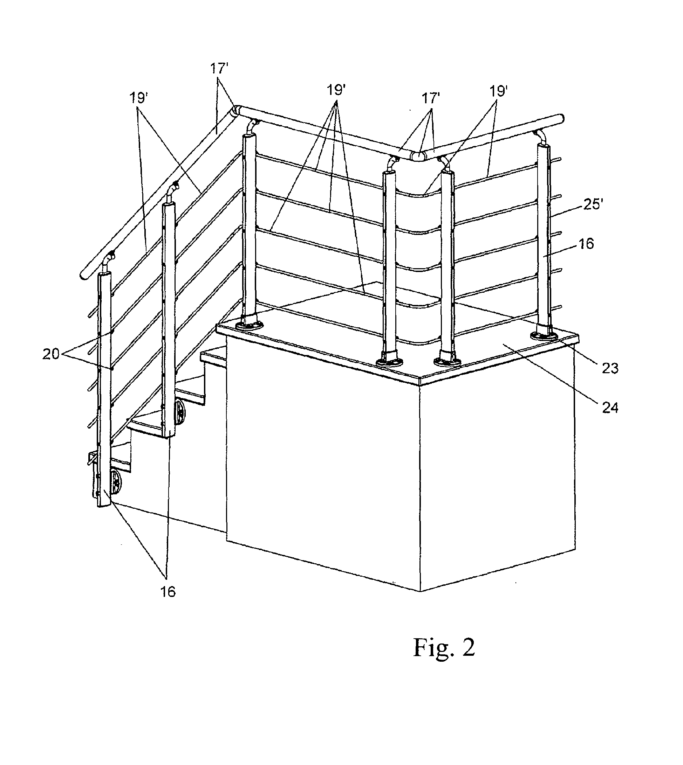

Dans le cadre de sa commercialisation, le système selon l'invention peut, par exemple, consister en un kit prêt à monter, le cas échéant, divisé en plusieurs lots, correspondant à des parties modulaires d'une rampe, balustrade ou analogue (sous-ensembles de construction) ou à des parties individuelles d'un tel système (poteaux 16, segments 17' et 19', éléments surfaciques 18, pièces 1, embouts 17'...), permettant de réaliser un système de balustrade, garde-corps, rampe ou analogue adaptable à la configuration in situ, autorisant différentes finitions, intégrant différentes fonctions dans une structure continue (figure 2) et à constitution modulaire.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention, tel que défini par les revendications.

## Revendications

1. Système de balustrade, rampe, garde-corps, garde-fou ou analogue pour escalier, terrasse, plateforme ou analogue, composé d'au moins deux poteaux (16) supportant une main courante ou barre d'appui supérieure (17) et entre lesquels s'étend au moins un élément de remplissage surfacique (18) et/ou plusieurs éléments d'entretoisement allongés (19), mutuellement espacés sur la hauteur desdits poteaux et solidarisés avec ces derniers au niveau de points de fixation (20),
la main courante (17) et/ou les éléments d'entretoisement (19) étant constitué(e)(s) par plusieurs segments ou parties (17', 19') assemblés bout à bout,
le système comprenant également une ou plusieurs pièces d'assemblage (1) reliant rigidement bout à bout les segments et/ou parties (17', 19') formant la main courante (17) et/ou les éléments d'entretoisement (19),
chaque pièce d'assemblage (1) étant composée d'une première partie (2) adaptée pour être emboîtée dans un orifice cylindrique (3) d'un premier corps (4) correspondant à un(e) segment et/ou partie (17', 19') et d'une seconde partie (5) adaptée pour être emboîtée dans un orifice cylindrique (6) d'un second corps (7) correspondant à un(e) autre segment et/ou partie (17', 19') et,
chaque pièce d'assemblage (1) étant telle que la première partie (2) comprend une première portion frontale (8) formée d'un corps cylindrique allongé (9) pourvu d'au moins deux formations (10) annulaires protubérantes, mutuellement décalées dans la direction longitudinale (XL) dudit corps (9),
système **caractérisé**
**en ce que** les première (2) et seconde (5) parties de chaque pièce d'assemblage (1) sont adaptées pour être emboîtées à force dans les orifices cylindriques (3, 6), borgnes ou traversants, desdits premier (4) et second (7) corps respectivement,
**en ce que** les formations annulaires protubérantes (10) de la première portion (8) de la première partie (2) de chaque pièce d'assemblage (1) présentent chacune en coupe une forme en barbelure ou en dent,
**en ce que** la première partie (2) de chaque pièce d'assemblage (1) comprend en outre une seconde portion (11) contiguë à la première portion (8) et s'évasant avec une section croissante jusqu'au plan d'interface (PI) avec la seconde partie (5), et
**en ce que** les diamètres (DF) des formations annulaires (10) sont égaux ou légèrement supérieurs au diamètre de l'orifice (3) du premier corps (4).

2. Système selon la revendication 1, **caractérisé en ce que** chaque poteau (16) est composé d'un corps creux profilé (21) pourvu d'une pluralité de points de fixation (20) pour l'élément de remplissage surfacique (18) et/ou les éléments (19) d'entretoisement allongés, d'un dispositif de montage (22) réglable en hauteur et en inclinaison pour la main courante (17) et d'une platine de fixation (23) pour une solidarisation latérale ou en extrémité basse du poteau (16) avec un support (24).

3. Système selon la revendication 2, **caractérisé en ce que** le corps creux profilé (21) présente en coupe une paroi à section elliptique tronquée au niveau des deux extrémités de son grand axe, de manière à présenter deux méplats opposés (25 et 25'), préférentiellement de largeurs différentes, et **en ce qu'**il comporte à proximité d'au moins l'un des deux méplats (26, 26'), préférentiellement au niveau des deux, une paire d'ailes (25, 25') formant par coopération, d'une part, une gorge ou des rails de guidage et/ou de positionnement pour un ou plusieurs composant(s) constitutif(s) (29, 29' ; 30) du dispositif de montage (22) et/ou, d'autre part, des paliers de maintien pour les composants (34, 37) constitutifs des points de fixation (20) répartis sur la hauteur du poteau (16) concerné.

4. Système selon l'une quelconque des revendications 2 et 3, **caractérisé en ce que** le dispositif de montage (22) pour la main courante (17) de chaque poteau (16) est constitué, d'une part, par un bras porteur (27) comprenant une partie coudée (27') sur l'extrémité de laquelle est solidarisée, avec faculté de pivotement et d'ablocage en position, une plaquette (28) de soutien et de fixation de la main courante (17), et une partie droite (27") formant coulisseau et, d'autre part, par deux composants complémentaires (29, 29' ; 30) montés dans l'extrémité supérieure du corps creux profilé (21) et destinés à assurer le coulissement guidé et le blocage en position avec serrage de la partie rectiligne formant coulisseau (27") du bras porteur (27).

5. Système selon la revendication 4, **caractérisé en ce que** les deux composants (29, 29' ; 30) du dispositif de montage (22) logés dans le corps creux profilé (21) consistent, d'une part, en un couvercle (29) destiné à fermer la partie supérieure dudit corps creux (21) et présentant une ouverture de passage (31) pour la partie formant coulisseau (27") d'un bras porteur (27), ledit couvercle (29) comportant sur sa face intérieure une formation (29') définissant une gorge de guidage profilée (32) dans le prolongement d'une partie du bord de l'ouverture de passage (31) et des surfaces (33) pour un appui latéral sur la face intérieure du corps creux profilé (21) et, d'autre part, en une pièce d'appui (30) assurant un guidage complémentaire du coulisseau (27") par rapport à la gorge de guidage 32) et adaptée pour forcer sous contrainte ladite partie formant coulisseau (27") dans le fond de ladite gorge de guidage (32) pour en assurer le blocage en position, soit directement, soit par l'intermédiaire de vis pointeaux (30') la traversant.

6. Système selon les revendications 3 et 5, **caractérisé en ce que** la formation (29') prolongeant intérieurement le couvercle (29) comporte deux fentes longitudinales (29") destinées à coopérer avec deux ailes de guidage (26') présentes sur la face interne de l'un (25') des deux méplats (25, 25') du corps creux profilé (21) du poteau (16) concerné et/ou une protubérance profilée latérale formant patin (29") destinée à coopérer avec la gorge délimitée par lesdites deux ailes (26') et **en ce que** la pièce d'appui (30) formant plaque de pression est logée dans une gorge délimitée par la paroi du corps creux (21) et deux ailes opposées (26) formées sur la base interne de cette paroi, au niveau de l'autre méplat (25).

7. Système selon les revendications 2 à 6, **caractérisé en ce que** chaque point de fixation (20) consiste en un écrou (34) à corps cylindrique comportant à l'une de ses extrémités une tête élargie (34') et à son extrémité opposée un orifice fileté borgne longitudinal (34"), ledit corps cylindrique étant pourvu d'une perforation traversante transversale (35), à proximité de ladite tête (34'), pour la réception d'une partie ou d'un segment d'un élément d'entretoisement allongé (19), ledit écrou (34) étant logé dans un orifice (36) ménagé dans l'un des méplats (25) du corps creux profilé (21) et coopérant avec une vis (37) montée dans un orifice (37') ménagé dans l'autre méplat (25'), opposé au premier méplat (25).

8. Système selon les revendications 3 et 7, **caractérisé en ce que** le corps cylindrique de l'écrou (34) de chaque point de fixation (20) est maintenu, à l'intérieur du corps creux profilé (21'), par la paire d'ailes (26) formées à proximité du méplat (25) pourvu de l'orifice (36) de logement dudit écrou (34), le cas échéant par des découpes (38) de forme adaptée ménagées dans ces ailes (26), la vis (37) de fixation et de serrage coopérant avec ledit écrou (34) étant avantageusement maintenue latéralement par la paire d'ailes intérieures (26') formées à proximité du méplat (25) opposé dudit corps creux profilé (21).

9. Système selon l'une quelconque des revendications 2 à 6, **caractérisé en ce qu'**au moins deux points de fixation (20) d'au moins un poteau ou de chaque poteau (16) consistent en des pièces de maintien (41), simples ou doubles, pour des éléments de remplissage surfaciques (18) en forme de plaques, notamment transparentes ou translucides, montées entre deux poteaux (16) consécutifs, lesdites plaques (18) étant reçues avec calage et maintenues par pincement avec verrouillage au niveau de chacune desdites pièces de maintien (41).

10. Système selon la revendication 9, **caractérisé en ce que** chaque pièce de maintien (41) est constituée, d'une part, par un corps de base (42) comprenant une première partie (43) à encastrer dans le poteau (16) correspondant et formant écrou et une seconde partie (44) en appui extérieur contre ledit poteau (16) et formant équerre ou cornière de calage et de fixation, la partie (43) formant écrou étant logé dans un orifice (36) ménagé dans l'un des méplats (25) du corps creux profilé (21) et coopérant avec une vis (37) montée dans un orifice (37') ménagé dans l'autre méplat (25'), opposé au premier méplat (25), et, d'autre part, par au moins une contre-pièce (45) séparée, pouvant être assemblée avec le corps de base (42) par l'intermédiaire d'un moyen de fixation (46), tel que par exemple une vis ou analogue, de manière à coopérer avec une aile (44') de l'équerre ou cornière (44) du corps de base (42) pour assurer le maintien par pincement avec verrouillage d'un coin d'une plaque rectangulaire formant élément de remplissage surfacique (18).

11. Système selon l'une quelconque des revendications 1 à 10, **caractérisé en ce que** les segments (17', 19') rectilignes, et le cas échéant coudés, formant respectivement la main courante (17) et les éléments d'entretoisement (19) allongés sont reliés entre eux, deux à deux, au niveau de leurs extrémités adjacentes en butée et pourvus d'orifices (3, 6) adaptés, par une pièce d'assemblage (1), reçue entièrement dans lesdits orifices (3, 6) contiguës.

12. Système selon l'une quelconque des revendications 1 à 11, **caractérisé en ce que** les parties (17', 19') en forme d'embouts rapportées sur les extrémités libres de la main courante (17) et/ou des éléments d'entretoisement allongés (19) sont montés sur lesdites extrémités chacun par l'intermédiaire d'une pièce d'assemblage (1), adaptée pour un montage à force et escamoté dans des orifices (17', 19') correspondant, respectivement de l'embout et de l'extrémité libre du segment concernés.

13. Système selon l'une quelconque des revendications 1 à 12, **caractérisé en ce que** chaque élément de remplissage surfacique (18), préférentiellement transparent, par exemple sous forme d'un panneau de verre acrylique, est fixé sur les éléments d'entretoisement allongés (19) par l'intennédiaire de pièces d'accrochage (39) et **en ce qu'**il comprend également, le cas échéant, en tant que composants d'entretoisement, des câbles passant par les points de fixation (20) correspondants des différents poteaux (16) et montés en extrémité sur des tendeurs.

14. Système selon l'une quelconque des revendications 1 à 13, **caractérisé en ce que** les éléments constitutifs du poteau (16), ainsi que les écrous (34) des points de fixation (20), sont réalisés en aluminium, ainsi que certaines parties au moins de la main courante (17) et **en ce que** les éléments d'entretoisement (19) et les éléments de visseries (37) sont réalisés en acier, des joints de séparation (40) en un matériau synthétique étant disposés entre les surfaces de contact des éléments en des matériaux différents.

15. Système selon l'une quelconque des revendications 1 à 14, **caractérisé en ce qu'**il consiste en un kit prêt à monter, le cas échéant, divisé en plusieurs lots.

## Patentansprüche

1. System für Geländer, Rampen, Gitter, Brüstungen oder dergleichen für Treppen, Terrassen, Plattformen oder dergleichen, umfassend mindestens zwei Ständer (16), die einen Handlauf oder oberen Stützbalken (17) tragen und zwischen denen sich mindestens ein Flächenfüllelement (18) und/oder mehrere längliche Querverstrebungselemente (19) erstrecken, die auf der Höhe der Ständer voneinander beabstandet und mit diesen letztgenannten auf Höhe von Befestigungspunkten (20) verbunden sind,
wobei der Handlauf (17) und/oder die Querverstrebungselemente (19) von mehreren Segmenten oder Teilen (17', 19') gebildet sind, die Stoß an Stoß verbunden sind,
wobei das System auch einen oder mehrere Verbindungsteile (1) umfasst, das die Segmente und/oder Teile (17', 19'), die den Handlauf (17) und/oder die Querverstrebungselemente (19) bilden, starr Stoß an Stoß miteinander verbinden,
wobei jeder Verbindungsteil (1) aus einem ersten Teil (2), der dazu vorgesehen ist, in eine zylindrische Öffnung (3) eines ersten Körpers (4), der einem Segment und/oder Teil (17', 19') entspricht, gesteckt zu werden, und aus einem zweiten Teil (5) besteht, der dazu vorgesehen ist, in eine zylindrische Öffnung (6) eines zweiten Körpers (7), der einem weiteren Segment und/oder Teil (17', 19') entspricht, gesteckt zu werden, und
wobei jeder Verbindungsteil (1) derart ist, dass der erste Teil (2) einen ersten Frontabschnitt (8) umfasst, der von einem länglichen zylindrischen Körper (9) gebildet ist, der mit mindestens zwei ringförmigen Ausstülpungen (10) versehen ist, die wechselseitig in Längsrichtung (XL) des Körpers (9) versetzt sind,
wobei das System **dadurch gekennzeichnet ist,**
**dass** der erste (2) und der zweite (5) Teil jedes Verbindungsteils (1) derart vorgesehen sind, dass sie fest in die zylindrischen Öffnungen (3, 6), Scheinöffnungen oder durchgehende Öffnungen, des ersten (4) bzw. zweiten (7) Körpers eingesteckt werden,
**dass** die ringförmigen Ausstülpungen (10) des ersten Abschnitts (8) des ersten Teils (2) jedes Verbindungsteils (1) im Schnitt jeweils eine Form eines Widerhakens oder Zahns aufweisen,
**dass** der erste Teil (2) jedes Verbindungsteils (1) ferner einen zweiten Abschnitt (11) umfasst, der an den ersten Abschnitt (8) angrenzt und sich mit einem wachsenden Querschnitt bis zur Schnittstellenebene (PI) mit dem zweiten Teil (5) hin erweitert, und
**dass** die Durchmesser (DF) der ringförmigen Ausstülpungen (10) gleich oder etwas größer als der Durchmesser der Öffnung (3) des ersten Körpers (4) sind.

2. System nach Anspruch 1, **dadurch gekennzeichnet, dass** jeder Ständer (16) aus einem Hohlprofilkörper (21), der mit einer Vielzahl von Befestigungspunkten (20) für das Flächenfüllelement (18) und/oder die länglichen Querverstrebungselemente (19) versehen ist, einer in der Höhe und Neigung verstellbaren Montagevorrichtung (22) für den Handlauf (17) und einer Befestigungsplatte (23) für eine seitliche Verbindung oder Montage am unteren Ende des Ständers (16) mit einem Träger (24) besteht.

3. System nach Anspruch 2, **dadurch gekennzeichnet, dass** der Hohlprofilkörper (21) im Schnitt eine Wand mit im Bereich der beiden Enden ihrer langen Achse gekürztem elliptischem Querschnitt aufweist, um zwei gegenüberliegende Abflachungen (25 und 25') mit vorzugsweise unterschiedlichen Breiten aufzuweisen, und dass er in der Nähe mindestens einer der beiden Abflachungen (26, 26'), vorzugsweise auf Höhe beider, ein Paar Flügel (25, 25') aufweist, die durch Zusammenwirken einerseits eine Rille oder Schienen zur Führung und/oder Positionierung einer oder mehrerer Bestandteile (29, 29'; 30) der Montagevorrichtung (22) und/oder andererseits Haltelagerungen für die Bestandteile (34, 37) der Befestigungspunkte (20), die auf der Höhe des betreffenden Ständers (16) verteilt sind, bilden.

4. System nach einem der Ansprüche 2 und 3, **dadurch gekennzeichnet, dass** die Montagevorrichtung (22) für den Handlauf (17) jedes Ständers (16) einerseits von einem Tragarm (27), umfassend einen gebogenen Teil (27'), an dessen Ende mit der Möglichkeit des Schwenkens und Positionsfeststellung eine Platte (28) zum Halten und Befestigen des Handlaufs (17) angebracht ist, und einen geraden Teil (27"), der einen Gleitschieber bildet, und andererseits von zwei komplementären Bauteilen (29, 29'; 30) gebildet ist, die im oberen Ende des Hohlprofilkörpers (21) montiert und dazu bestimmt sind, das geführte Gleiten und die Positionsfeststellung mit Festklemmen der den Gleitschieber (27") des Tragarms (27) bildenden Platte zu gewährleisten.

5. System nach Anspruch 4, **dadurch gekennzeichnet, dass** die beiden Bauteile (29, 29'; 30) der Montagevorrichtung (22), die in dem Hohlprofilkörper (21) angeordnet sind, einerseits in einem Deckel (29) bestehen, der dazu bestimmt ist, den oberen Teil des Hohlkörpers (21) zu schließen, und eine Durchgangsöffnung (31) für den den Gleitschieber (27") eines Tragarms (27) bildenden Teil bildet, wobei der Deckel (29) auf seiner Innenseite eine Ausbildung (29') umfasst, die eine Führungsprofilnut (32) in der Verlängerung eines Teils des Randes der Durchgangsöffnung (31) und der Flächen (33) für eine seitliche Abstützung auf der Innenseite des Hohlprofilkörpers (21) definiert, und andererseits in einem Stützteil (30), das eine komplementäre Führung des Gleitschiebers (27") in Bezug zu der Führungsnut (32) sicherstellt und dazu vorgesehen ist, den den Gleitschieber (27") bildenden Teil unter Spannung fest in den Boden der Führungsnut (32) zu drücken, um seine Positionsfeststellung entweder direkt oder mit Hilfe von durch diese hindurchgehenden Arretierschrauben (30') zu gewährleisten.

6. System nach den Ansprüchen 3 und 5, **dadurch gekennzeichnet, dass** die Ausbildung (29'), die den Deckel (29) innen verlängert, zwei Längsschlitze (29") umfasst, die dazu bestimmt sind, mit zwei Führungsflügeln (26') zusammenzuwirken, die auf der Innenseite einer (25') der beiden Abflachungen (25, 25') des Hohlprofilkörpers (21) des betreffenden Ständers (16) zusammenzuwirken, und/oder eine seitliche profilierte Ausstülpung umfasst, die eine Gleitkufe (29") bilde, die dazu bestimmt ist, mit der von den beiden Flügeln (26') begrenzten Nut zusammenzuwirken, und dass der Stützteil (30), der eine Druckplatte bildet, in einer Nut angeordnet ist, die von der Wand des Hohlkörpers (21) und zwei gegenüberliegenden Flügeln (26) begrenzt ist, die an der inneren Basis dieser Wand im Bereich der anderen Abflachung (25) ausgebildet sind.

7. System nach den Ansprüchen 2 bis 6, **dadurch gekennzeichnet, dass** jeder Befestigungspunkt (20) in einer Mutter (34) mit zylindrischem Körper besteht, umfassend an einem ihrer Enden einen erweiterten Kopf (34') und an seinem gegenüberliegenden Ende eine längliche Scheingewindeöffnung (34"), wobei der zylindrische Körper mit einer durchgehenden Querperforation (35) in der Nähe des Kopfes (34') für die Aufnahme eines Teils oder eines Segments eines länglichen Querverstrebungselements (19) versehen ist, wobei die Mutter (34) in einer Öffnung (36) angeordnet ist, die in einer der Abflachungen (25) des Hohlprofilkörpers (21) vorgesehen ist und mit einer Schraube (37) zusammenwirkt, die in einer Öffnung (37') montiert ist, die in der anderen Abflachung (25') gegenüber der ersten Abflachung (25) vorgesehen ist.

8. System nach den Ansprüchen 3 und 7, **dadurch gekennzeichnet, dass** der zylindrische Körper der Mutter (34) jedes Befestigungspunktes (20) im Inneren des Hohlprofilkörpers (21') von dem Flügelpaar (26) gehalten wird, die in der Nähe der Abflachung (25) ausgebildet sind, die mit der Öffnung (36) für die Lagerung der Mutter (34) versehen ist, gegebenenfalls von Ausschnitten (38) von entsprechender Form, die in diesen Flügeln (26) vorgesehen sind, wobei die Befestigungs- und Klemmschraube (37), die mit der Mutter (34) zusammenwirkt, vorzugsweise seitlich von dem inneren Flügelpaar (26') gehalten wird, die in der Nähe der gegenüberliegenden Abflachung (25) des Hohlprofilkörpers (21) ausgebildet sind.

9. System nach einem der Ansprüche 2 bis 6, **dadurch gekennzeichnet, dass** mindestens zwei Befestigungspunkte (20) mindestens eines Ständers oder jedes Ständers (16) in einfachen oder doppelten Halteteilen (41) für Flächenfüllelemente (18) in Form von insbesondere durchsichtigen oder durchscheinenden Platten bestehen, die zwischen zwei aufeinander folgenden Ständern (16) montiert sind, wobei die Platten (18) verkeilt und durch Festklemmen unter Verriegeln im Bereich jedes der Halteteile (41) gehalten werden.

10. System nach Anspruch 9, **dadurch gekennzeichnet, dass** jeder Halteteil (41) einerseits von einem Basiskörper (42) gebildet ist, umfassend einen ersten Teil (43), der in den entsprechenden Ständer (16) einzusetzen ist und eine Mutter bildet, und einen zweiten Teil (44), der sich außen am Ständer (16) abstützt und ein Winkeleisen oder einen Verkeilungs- und Befestigungswinkel bildet, wobei der die Mutter bildende Teil (43) in einer Öffnung (36) angeordnet ist, die in einer der Abflachungen (25) des Hohlprofilkörpers (21) vorgesehen ist, und mit einer Schraube (37) zusammenwirkt, die in einer Öffnung (37') montiert ist, die in der anderen Abflachung (25') gegenüber der ersten Abflachung (25) vorgesehen ist, und andererseits von mindestens einem getrennten Gegenstück (45) gebildet ist, das mit dem Basiskörper (42) mit Hilfe eines Befestigungsmittels (46), wie beispielsweise einer Schraube oder dergleichen, verbunden werden kann, um mit einem Flügel (44') des Winkeleisens oder Befestigungswinkels (44) des Basiskörpers (42) zusammenzuwirken, um den Halt einer Ecke einer rechteckigen Platte, die ein Flächenfüllelement (18) bildet, durch Klemmen unter Verriegeln zu gewährleisten.

11. System nach einem der Ansprüche 1 bis 10, **dadurch gekennzeichnet, dass** die geraden und gegebenenfalls gebogenen Segmente (17', 19'), die den Handlauf (17) bzw. die länglichen Querverstrebungselemente (19) bilden, miteinander paarweise im Bereich ihrer aneinander anschlagenden und mit entsprechenden Öffnungen (3, 6) versehenen Enden durch einen Verbindungsteil (1), der zur Gänze in den angrenzenden Öffnungen (3, 6) aufgenommen ist, verbunden sind.

12. System nach einem der Ansprüche 1 bis 11, **dadurch gekennzeichnet, dass** die Teile (17', 19') in Form von auf die freien Enden des Handlaufs (17) und/oder der länglichen Querverstrebungselemente (19) aufgesetzten Ansätzen auf den Enden jeweils durch einen Verbindungsteil (1) montiert sind, der für eine feste Montage durch Einstecken in entsprechende Öffnungen (17', 19') des Ansatzes bzw. des freien Endes des betreffenden Segments geeignet ist.

13. System nach einem der Ansprüche 1 bis 12, **dadurch gekennzeichnet, dass** jedes Flächenfüllelement (18), das vorzugsweise durchsichtig ist, beispielsweise in Form einer Acrylglasplatte, auf den länglichen Querverstrebungselementen (19) mit Hilfe von Verbindungsteilen (39) befestigt ist, und dass es gegebenenfalls als Querverstrebungsbauteile auch Kabel umfasst, die durch die entsprechenden Befestigungspunkte (20) der verschiedenen Ständer (16) verlaufen und am Ende auf Spannelementen montiert sind.

14. System nach einem der Ansprüche 1 bis 13, **dadurch gekennzeichnet, dass** die den Ständer (16) bildenden Elemente sowie die Muttern (34) der Befestigungspunkte (20) aus Aluminium hergestellt sind, wie auch zumindest gewisse Teile des Handlaufs (17), und dass die Querverstrebungselemente (19) und die Schraubelemente (37) aus Stahl hergestellt sind, wobei Trennfugen (40) aus einem Kunststoff zwischen den Kontaktflächen der Elemente aus unterschiedlichen Materialien vorgesehen sind.

15. System nach einem der Ansprüche 1 bis 14, **dadurch gekennzeichnet, dass** es in einem Montagekasten besteht, der gegebenenfalls in mehrere Einheiten untereilt ist.

## Claims

1. System consisting of a balustrade, ramp, banister, guard rail or the like for a staircase, terrace, platform or the like, composed of at least two posts (16) supporting a handrail or upper grab rail (17) and between which at least one filling element (18) and/or a plurality of elongated bracing elements (19) extend, which are spaced part over the height of said posts and are joined to the latter at attachment points (20),
the handrail (17) and/or the bracing elements (19) being formed by several segments or parts (17', 19') assembled end to end,
the system also comprises one or more assembly parts (1) which connect rigidly end to end the segments and/or parts (17', 19') forming the handrail (17) and/or bracing elements (19),
each assembly part (1) consisting of a first part (2) adapted to be slotted into a cylindrical opening (3) of a first body (4) corresponding to a segment and/or part (17', 19') and a second part (5) adapted to be slotted into a cylindrical opening (6) of a second body (7) corresponding to another segment and/or part (17', 19') and
each assembly part (1) being such that the first part (2) comprises a first front portion (8) formed by an elongated cylindrical body (9) provided with at least two annular protruding parts (10), which are offset mutually in the longitudinal direction (XL) of the said body (9),
the system being **characterised in that**
the first (2) and second (5) parts of each assembly part (1) are adapted to be slotted by force into the blind or traversing cylindrical openings (3, 6) of said first (4) and second (7) body respectively,
**in that** the annular protruding parts (10) of the first portion (8) of the first part (2) of each assembly part (1) each have in cross section the form of a barb or a tooth,
**in that** the first part (2) of each assembly part (1) also comprises a second portion (11) adjoining the first portion (8) and flaring out with an increasing cross section up to the interface plane (PI) with the second part (5) and **in that** the diameters (DF) of the annular parts (10) are equal to or slightly greater than the diameter of the opening (3) of the first body (4).

2. System according to claim 1, **characterised in that** each post (16) consists of a profiled hollow body (21) provided with a plurality of attachment points (20) for the filling element (18) and/or elongated bracing elements (19) of an assembly device (22) which can be adjusted in height and inclination for the handrail (17) and a securing plate (23) for a connecting laterally or at the bottom end of the post (16) with a support (24).

3. System according to claim 2, **characterised in that** the profiled hollow body (21) has in cross section a wall with an elliptical cross section that is truncated at both ends of its main axis, so as to have two opposite flat parts (25 and 25'), preferably of different widths, and **in that** it comprises close to at least one of the two flat parts (26, 26'), preferably at both, a pair of wings (25, 25') which form by cooperation, on the one hand, a groove or guide and/or positioning rails for one or more constituent components (29, 29'; 30) of the assembly device (22) and/or, on the other hand, support bearings for the constituent components (34, 37) of the attachment points (20) distributed over the height of the relevant post (16).

4. System according to any one of claims 2 and 3, **characterised in that** the assembly device (22) for the handrail (17) of each post (16) is formed, on the one hand, by a support arm (27) comprising a bent part (27') to the end of which is joined, with the ability to pivot and lock in position, a plate (28) for supporting and attaching the handrail (17) and a straight part (27") forming a slide, and on the other hand, by two complementary components (29, 29'; 30) mounted in the upper end of the profiled hollow body (21) and intended to ensure the guided sliding and locking in position with clamping of the straight part forming the slide (27") of the support arm (27).

5. System according to claim 4, **characterised in that** the two components (29, 29'; 30) of the assembly device (22) mounted in the profiled hollow body (21) consist, on the one hand, of a cover (29) designed to close the upper part of said hollow body (21) and having a through opening (31) for the part forming a slide (27") of a support arm (27), said cover (29) comprising on its inner face an element (29') defining a profiled guiding groove (32) in the extension of part of the edge of the passage opening (31) and surfaces (33) for bearing laterally on the inner surface of the profiled hollow body (21) and, on the other hand, a bearing part (30) ensuring the complementary guiding of the slide (27") relative to the guiding groove (32) and adjusted to force under stress said part forming a slide (27") into the bottom of said guiding groove (32) to ensure the locking in position, either directly or by means of restriction screws (30') traversing it.

6. System according to claims 3 and 5, **characterised in that** the element (29') extending the cover (29) internally comprises two longitudinal slots (29") designed to cooperate with two guiding wings (26') formed on the inner face of one (25') of the two flat parts (22, 25') of the profiled hollow body (21) of the post concerned (16) and/or a lateral profiled protuberance forming a skate (29") designed to cooperate with the groove delimited by said two wings (26') and **in that** the bearing part (30) forming a pressure plate is housed in a groove delimited by the wall of the hollow body (21) and two opposite wings (26) formed on the internal base of this wall at the level of the other flat part (25).

7. System according to claims 2 to 6, **characterised in that** each attachment point (20) consists of a nut (34) with a cylindrical body having at one of its ends an enlarged head (34') and at its opposite end a threaded blind longitudinal opening (34"), said cylindrical body being provided with a traversing transverse perforation (35) close to said head (34') for receiving a part or a segment of an elongated bracing element (19), said nut (34) being housed in an opening (36) arranged in one of the flat parts (25) of the profiled hollow body (21) and cooperating with a screw (37) mounted in an opening (37') arranged in the other flat part (25') opposite the first flat part (25).

8. System according to claims 3 and 7, **characterised in that** the cylindrical body of the nut (34) of each attachment point (20) is held, on the inside of the profiled hollow body (21'), by the pair of wings (26) formed close to the flat part (25) provided with the opening (36) of the housing of said nut (34), possibly by cut-outs (38) with an adapted form arranged in said wings (26), the attachment and clamping screw (37) cooperating with said nut (34) being preferably maintained laterally by the pair of internal wings (26') formed next to the flat part (25) opposite said profiled hollow body (21).

9. System according to any one of claims 2 to 6, **characterised in that** at least two attachment points (20) of at least one post or each post (16) consist of single or double support parts (41), for the filling elements (18) in the form of plates, in particular transparent or translucent plates, mounted between two consecutive posts (16), said plates (18) being received with adjustment and maintained by gripping with locking at the level of each of the said support parts (41).

10. System according to claim 9, **characterised in that** each support part (41) is formed, on the one hand, by a base body (42) comprising a first part (43) to be slotted in the corresponding post (16) and forming a nut and a second part (44) bearing externally against the said post (16) and forming a bracket or angle bar for adjustment and securing, the part (43) forming a nut being housed in an opening (36) in one of the flat parts (25) of the profiled hollow body (21) and cooperating with a screw (37) mounted in an opening (37') arranged in the other flat part (25') opposite the first flat part (25), and on the other hand by at least one separate counterpart (45), which can be assembled with the base body (42) by means of a securing means (46), such as for example a screw or the like so as to cooperate with a wing (44') of the bracket or angle bar (44) of the base body (42) to ensure support by gripping with locking of a comer of a rectangular plate forming the filling element (18).

11. System according to any one of claims 1 to 10, **characterised in that** the straight segments (17', 19'), possibly bent, forming respectively the handrail (17) and the elongated bracing elements (19) are connected together, two by two, with their adjacent ends in abutment and provided with adapted openings (3, 6), by an assembly part (1) mounted fully in the said adjoining openings (3, 6).

12. System according to any one of claims 1 to 11, **characterised in that** the parts (17', 19') in the form of end pieces attached to the free ends of the handrail (17) and/or elongated bracing elements (19) are mounted on said ends each by means of an assembly part (1) adjusted for assembly by force and retracted into the corresponding openings (17', 19') respectively of the end piece and the free end of the segment concerned.

13. System according to any one of claims 1 to 12, **characterised in that** each, preferably transparent, filling element (18), for example in the form of panel of acrylic glass, is fixed to the elongated bracing elements (19) by means of attachment parts (39) and **in that** it also comprises, as necessary, as bracing elements, cables passing through the corresponding attachment points (20) of the different posts (16) and mounted at the end to tensioners.

14. System according to any one of claims 1 to 13, **characterised in that** the constituent elements of the post (16), as well as the nuts (34) of the attachment points (20), are made of aluminium, as well as some parts at least of the handrail (17) and **in that** the bracing elements (19) and the screw elements (37) are made of steel, the separating joints (40) made of synthetic material being arranged between the contact surfaces of the elements made of different materials.

15. System according to any one of claims 1 to 14, **characterised in that** it consists of a ready-to-assemble kit, divided into several lots as necessary.
